Europäisches Patentamt

European Patent Office

Office européen des brevets

(19)

(11) Veröffentlichungsnummer: **0 340 390**

**A2**

(12) # EUROPÄISCHE PATENTANMELDUNG

(21) Anmeldenummer: **89102205.5**

(51) Int. Cl.⁴: **A43D 111/00**

(22) Anmeldetag: **09.02.89**

(30) Priorität: **05.05.88 DE 3815334**

(43) Veröffentlichungstag der Anmeldung:
**08.11.89 Patentblatt 89/45**

(84) Benannte Vertragsstaaten:
**DE FR GB IT**

(71) Anmelder: **SCHÖN & CIE GMBH**
**Im Gehörnerwald 2**
**D-6780 Pirmasens(DE)**

(72) Erfinder: **Jung, Klaus, Dipl.-Ing.**
**Keil & Schaafhausen Eysseneckstrasse 31**
**D-6000 Frankfurt am Main 1(DE)**
Erfinder: **Hartmann, Willi, Dipl.-Ing.**
**Keil & Schaafhausen Eysseneckstrasse 31**
**D-6000 Frankfurt am Main 1(DE)**

(74) Vertreter: **Keil, Rainer A., Dipl.-Phys. Dr. et al**
**KEIL & SCHAAFHAUSEN Patentanwälte**
**Eysseneckstrasse 31**
**D-6000 Frankfurt am Main 1(DE)**

(54) **Schuhfertigungsanlage.**

(57) Die Erfindung bezieht sich auf eine Schuhfertigungsanlage mit einem von einer Transportanlage gebildeten, vorzugsweise im wesentlichen geschlossenen Transportweg für Paletten, auf welchen je ein Leisten bzw. eine Schuheinheit, bestehend aus Leisten, auf dem Leistenboden angeordneter Brandsohle und Schuhschaft, fixierbar ist, und wobei der Transportanlage mindestens eine Station für das Aufbringen der Brandsohle auf dem Leistenboden, eine Station für das Aufziehen des Schuhschafts auf den Leisten, eine Spitzenzwickmaschine, eine Fersen- und Seitenzwickmaschine und eine Station für das Ausleisten des Schuhs zugeordnet sind. Zur Rationalisierung und Verbesserung des Fertigungsprozesses wird vorgeschlagen, daß eine erste Transporteinrichtung zur Entnahme des ggf. mit der Brandsohle versehenen Leistens von der Transportanlage an die Spitzenzwickmaschine und eine zweite Transporteinrichtung vorgesehen sind, welche nach dem Aufleisten des Schuhschafts, dem Spitzenzwicken sowie dem Fersen- und Seitenzwicken durch Handhabung von Hand die spitzen-, seiten- und fersengezwickte Schuheinheit aus der Fersen- und Seitenzwickmaschine entnimmt, wieder auf die Palette lagegerecht aufsetzt und dort fixiert.

Fig.1

EP 0 340 390 A2

## Schuhfertigungsanlage

Die Erfindung bezieht sich auf eine Schuhfertigungsanlage mit einem von einer Transportanlage gebildeten, vorzugsweise im wesentlichen geschlossenen Transportweg für Paletten, auf welchen je ein Leisten bzw. eine Schuheinheit, bestehend aus Leisten, auf dem Leistenboden angeordneter Brandsohle und Schuhschaft, fixierbar ist, und wobei der Transportanlage mindestens eine Station für das Aufbringen der Brandsohle auf den Leistenboden, eine Station für das Aufziehen des Schuhschafts auf den Leisten, eine Spitzenzwickmaschine, eine Fersen- und Seitenzwickmaschine und eine Station für das Ausleisten des fertiggezwickten bzw. fertiggestellten Schuhes zugeordnet sind.

Eine derartige Anlage ist in der noch nicht veröffentlichten deutschen Patentanmeldung P 38 04 583.4 vom 13. Febr. 1988 vorgeschlagen.

Die vorliegende Erfindung zielt auf eine möglichst rationelle Fertigung bei bestmöglichem Zwickergebnis ab.

Diese Aufgabe wird erfindungsgemäß im wesentlichen gelöst durch eine erste Transporteinrichtung zur Entnahme und Überführung des ggf. mit der Brandsohle versehenen Leistens von der Transportanlage an die Spitzenzwickmaschine und eine zweite Transporteinrichtung, welche nach dem Aufleisten des Schuhschafts, dem Spitzenzwicken sowie dem Fersen- und Seitenzwicken durch Handhabung von Hand die spitzen-, seiten- und fersengezwickte Schuheinheit aus der Fersen- und Seitenzwickmaschine entnimmt, wieder auf die Palette lagegerecht aufsetzt und dort fixiert.

Hierdurch wird erreicht, daß in einem zügigen Materialfluß die wesentlichen für die Schuhfertigung erforderlichen Einheiten, nämlich Spitzenzwickmaschinen und Fersen- und Seitenzwickmaschine herkömmlicher Art eingesetzt werden können. Die Paletten, von welchen der Leisten in den Zwickmaschinen zu bearbeitenden Schuheinheiten entnommen sind, laufen während der Ausführung der jeweiligen Zwickvorgänge in ein Zwischenstück der Transportanlage, beispielsweise mittels eines gesteuerten Anschlags aufgereiht und stehen dann für die Wiederaufnahme der fertiggezwickten Schuheinheit wieder zur Verfügung, um den übrigen Teil der Transportanlage zu durchlaufen.

Die Entnahme des ggf. mit einer Brandsohle versehenen Leistens aus der Transportanlage für die Zwickvorgänge erfolgt maschinell einfach beispielsweise dadurch, daß die erste Transporteinrichtung ein erstes Handhabungsgerät für das Ergreifen und Ablegen des ggf. mit Brandsohle versehenen Leistens auf einem Transportband o.dgl. aufweist.

Diesem Transportband von der Transportanlage zu der Spitzenzwickmaschine ist vorzugsweise ein Schäftelager und ein Kappendämpfgerät zugeordnet. Aus dem Schäftelager werden die zu den jeweiligen Leisten gehörenden Schäfte in der erforderlichen Reihenfolge entnommen bzw. zugeführt, so daß die dort tätige Bedienungsperson den Schaft nach dem Kappendämpfen auf den zugehörigen Leisten aufziehen kann. Zu diesem Zweck läuft der ggf. mit Brandsohle versehene Leisten an einem Anschlag des Transportbandes auf, wo er von der Bedienungsperson entnommen werden kann.

Gemäß einem weiteren Erfindungsmerkmal ist dem Transportband von der Transportanlage zur Spitzenzwickmaschine eine Kontrolleinrichtung zugeordnet, welche bei Entnahme des ggf. mit Brandsohle versehenen Leistens von dem Transportband bzw. bei Einsetzen der Schuheinheit in die Spitzenzwickmaschine das erste Handhabungsgerät so ansteuert, daß dieses den nächsten ggf. mit Brandsohle versehenen Leisten der Transportanlage entnimmt und auf das Transportband ablegt. Auf diese Weise ergeben sich auf dem Transportband keine Stauungen; die Leisten werden vielmehr entsprechend der Arbeitsgeschwindigkeit der Bedienungsperson an den Zwickmaschinen aus dem Transportweg der Transportanlage ausgeschleust.

Gemäß einer weiteren Ausgestaltung der Erfindung weist die zweite Transporteinrichtung ein zweites Handhabungsgerät auf, welches dem ersten Handhabungsgerät ähnlich sein kann und welches die spitzen-, seiten- und fersengezwickte Schuheinheit aus der Fersen- und Seitenzwickmaschine entnimmt, wieder auf die Palette lagegerecht aufsetzt und dort fixiert, wonach die Schuheinheit mittels der Palettentransportanlage weiter gefördert werden kann.

Mit der Erfindung wird weiterhin vorgeschlagen, daß der Transportanlage dann in Förderrichtung nach der zweiten Transporteinrichtung weitere Schuhbearbeitungs- und Behandlungseinrichtungen zugeordnet sind, welche entweder die auf der Palette fixierte vorbeifahrende oder im Takt angehaltene Schuheinheit bearbeiten und/oder behandeln, oder die Palette mit der darauf fixierten Schuheinheit aus der Transportanlage zur Bearbeitung und/oder Behandlung der Schuheinheit ausschleusen und anschließend wieder einschleusen, oder die Schuheinheit von der Palette zur Bearbeitung und/oder Behandlung entnehmen und anschließend wieder lagegerecht auf die Palette absetzen. Hierdurch kann eine hohe Fertigungsrate der Schuhfertigungsanlage sichergestellt werden.

Zu den genannten weiteren Schuhbearbeitungs- und/oder Behandlungseinrichtungen können ein Hitzebehandlungsgerät und/oder eine Vorrauhmaschine und/oder eine Zwickeinschlagaufrauhmaschine und/oder eine Klebstoffauftragemaschine für den Schuhboden und/oder eine Sohlenklebepresse und/oder eine Absatzaufnagelmaschine gehören, die vollständig oder weitgehend selbsttätig arbeiten.

Der Transportanlage ist dann in Transportrichtung nach den Schuhbearbeitung- und/oder Behandlungseinrichtungen die Ausleiststation zugeordnet. Hier wird der ankommenden Palette mit der fertigen Schuheinheit die Schuheinheit entnommen, der Leisten von dem Schuh getrennt und wieder auf die freigewordene Palette aufgesetzt oder die Palette mit einem neuen Leisten versehen.

Für den Materialfluß und daher eine rationelle Fertigung ist es ferner von Vorteil, wenn der Transportanlage zwischen Ausleiststation und der ersten Transporteinrichtung eine Station zum Befestigen einer Brandsohle auf dem Leisten zugeordnet ist. Diese Brandsohlenbefestigungsstation kann ein Brandsohlenmagazin aufweisen, aus welchem die zu dem betreffenden Leisten gehörende Brandsohle entnommen oder zugeführt wird.

In spezieller Ausgestaltung des Erfindungsgedankens wird ferner vorgeschlagen, daß die Transportanlage die spitzen-, fersen- und seitengezwickte Schuheinheit auf der Palette durch das Hitzebehandlungsgerät hindurchfährt. Die Hitzebehandlung ist für den Fall des Klebezwickens erforderlich.

Die Vorrauhmaschine sollte vorteilhafterweise seitlich der Transportanlage stehen und die auf der Palette fixierte Schuheinheit roh überrauhen, so daß eine kurze Bearbeitungszeit eingehalten werden kann.

An der Zwickeinschlagaufrauhmaschine ist es dagegen in Anpassung an den dort auszuführenden Bearbeitungsvorgang zweckmäßiger, wenn die Palette mit der darauf fixierten Schuheinheit aus der Transportanlage ausgeschleust, in die Zwickein schlagaufrauhmaschine gefahren, dort die Schuheinheit am Zwickeinschlag aufgerauht und anschließend die Palette mit der darauf fixierten Schuheinheit wieder in die Transportanlage eingeschleust wird.

Die Funktionsfähigkeit der gesamten Fertigungsanlage wird noch dadurch weiter erhöht, wenn die Transportanlage zugeordneten Maschinen, Einrichtungen und Geräte über eine zentrale elektronische, programmierbare Steuereinheit miteinander in Verbindung stehen.

Insbesondere in diesem Zusammenhang dient es einer weiteren Verbesserung und Vereinfachung der Fertigung, wenn der Palette und/oder dem Leisten eine Kodierung über Größe, Form, Machart u.dgl. Kenngrößen für den jeweils herzustellenden Schuh zugeordnet sind/ist, welche von den Maschinen, Einrichtungen und Geräten lesbar und in den entsprechenden programmgesteuerten Bearbeitungsablauf der betreffenden Maschinen, Einrichtungen und Geräte, vorzugsweise über die zentrale Steuereinheit, umsetzbar ist. Mit dieser Kodierung kann die Palette und/oder der Leisten beispielsweise in der Station versehen werden, in welcher auch die Brandsohle auf den Leisten aufgebracht wird.

Weitere Ziele, Vorteile, Merkmale und Anwendungsmöglichkeiten der vorliegenden Erfindung ergeben sich aus der nachfolgenden Beschreibung und Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:

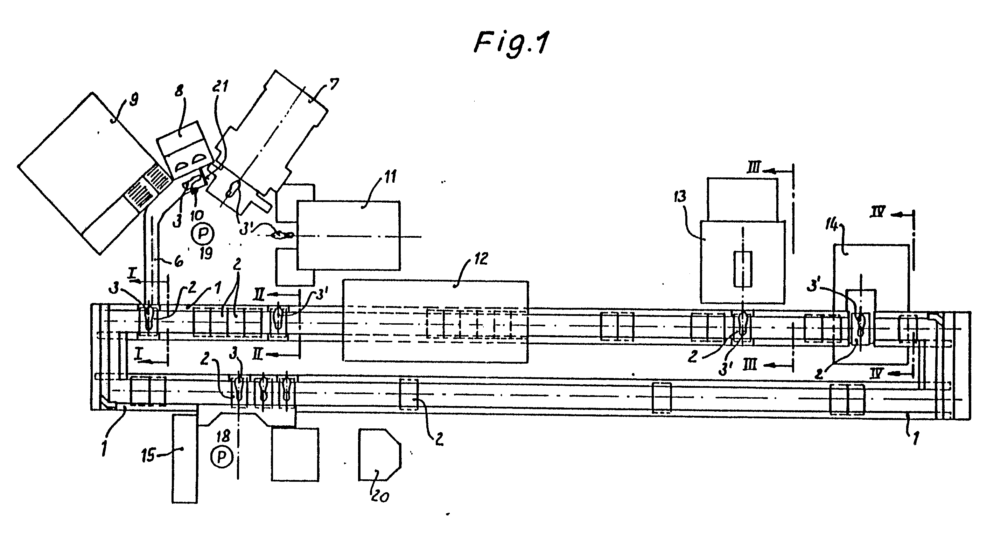

Fig. 1 eine die Erfindung aufweisende Fertigungsanlage schematisch in Draufsicht, wobei die Position der Handhabungsgeräte nur angedeutet ist,

Fig. 2 einen Schnitt entlang der Linie I-I von Fig. 1 mit dem Handhabungsgerät an der Entnahmestelle der Transportanlage,

Fig. 3 einen Schnitt entlang der Linie II-II von Fig. 1 mit dem dort positionierten Handhabungsgerät an der Beladestelle von der Fersen- und Seitenzwickmaschine in die Transportanlage,

Fig. 4 einen Schnitt entlang der Linie III-III von Fig. 1 mit der Vorrauhmaschine, und

Fig. 5 einen Schnitt entlang der Linie IV-IV von Fig. 1 der Zwickeneinschlagaufrauhmaschine.

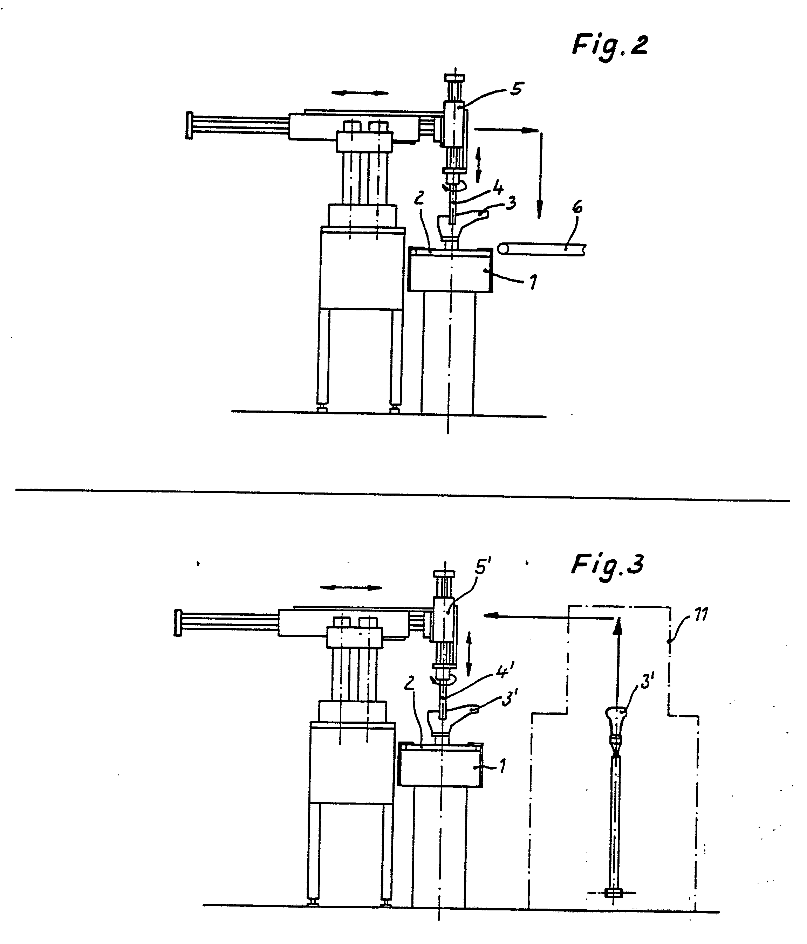

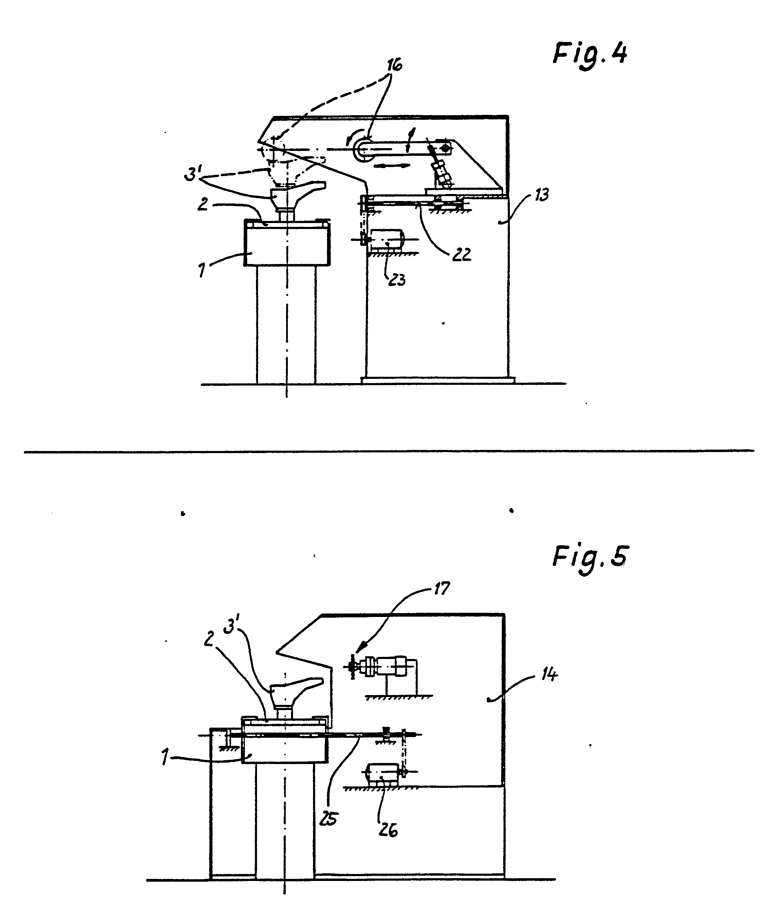

Die Transportanlage 1 besteht im wesentlichen aus einem geschlossenen Fördersystem für das Transportieren einzelner Paletten 2. Auf den Paletten 2 sind Leisten 3 fixierbar, was beispielsweise von Hand in der Station 18 erfolgen kann, in welcher eine Bedienungsperson P den Leisten 3 mit einer zugehörigen Brandsohle versieht, welche er aus einem Brandsohlenmagazin 15 entnimmt, oder aus welchem die Brandsohlen in der erforderlichen Reihenfolge zugeführt werden. Die Palette 2 mit dem mit Brandsohle versehenen Leisten 3 wird von dort aus bis in eine Position gefahren, in welcher ein Handhabungsgerät 5 (Fig. 2) seitlich des Transportweges der Transportanlage 1 und den Transportweg überragend angeordnet ist. Das Handhabungsgerät 5 hat einen Greifer 4, mit welchem es den mit Brandsohle versehenen Leisten 3 ergreifen und auf ein seitlich von der Transportanlage 1 zu einer Spitzenzwickmaschine 7 wegführendes Transportband 6 ablegen kann. Seitlich des Transportbandes 6 ist ein Schäftelager 9 angeordnet, von welchem aus die zu den betreffenden Leisten 3 gehörenden Schuhschäfte zugeführt bzw. entnommen werden können. Die in der Schuhschaftaufziehstation 19 tätige Bedienungsperson P nimmt den entsprechenden Schuhschaft, führt ihn in ein dort ebenfalls angeordnetes Kappendämpfgerät 8 und zieht ihn auf einen Leisten 3, welchen sie dem Transportband 6 entnommen hat. Das Entnehmen des Leistens 3 von dem Transportband 6, wo der Leisten 3 beispielsweise an einem Anschlag 21 aufgelaufen ist, stellt eine Kontrolleinrichtung 10 fest und meldet dies dem Handhabungsgerät 5, welches daraufhin den nächsten Leisten 3 mit Brandsohle der Transportanlage 1 entnimmt und auf das Transportband 6 ablegt. So werden die zu bearbeitenden Leisten 3 in der Folge der Arbeitsgeschwindigkeit der Bedienungsperson P zur Verfügung gestellt. Die Bedienungsperson P führt nun die aus Leisten 3, auf dem Leistenboden angeordneter Brandsohle und Schuhschaft bestehende Schuheinheit 3' in die Spitzenzwickmaschine 7 ein. Nach Beendigung des Spitzenzwickes wird die Schuheinheit 3' von ihr entnommen und in die Fersen- und Seitenzwickmaschine 11 in herkömmlicher Weise von Hand eingesetzt. Damit sich die Bedienungsperson während des Ausführens des Fersen- und Seitenzwickens bereits wieder dem Transportband 6 und dem nächsten Leisten 3 zuwenden kann, wird die spitzen-, fersen-und seitengezwickte Schuheinheit 3' der Fersen- und Seitenzwickmaschine 11 selbsttätig von einem weiteren Handhabungsgerät 5', das dem ersten Handhabungsgerät 5 ähnlich sein kann, entnommen und lagegerecht auf die auf der Transportanlage 1 nunmehr vorgerückte leere Palette 2 wieder aufgesetzt und fixiert. Die so vervollständigte Palette 2 wird dann für den Weitertransport in der Transportanlage 1 wieder freigegeben. Die Palette 2 durchläuft im folgenden mit der darauf befindlichen Schuheinheit 3' durch ein Hitzebehandlungsgerät 12. Anschließend gelangt er in den Bereich einer Vorrauhmaschine 13, welche seitlich der Transportanlage 1 steht. Dort wird der gesamte Schuhboden grob vorgerauht, während die Schuheinheit 3' auf der Palette 2 in der Transportanlage 1 verbleibt. Dies kann dadurch bewerkstelligt werden, daß das Schleif- oder Rauhrad 16 (Fig. 4) der Vorrauhmaschine 13 auf einem Schlitten hin- und herfahrbar sowie heb- und senkbar angeordnet ist. Für das Hin- und Herfahren kann beispielsweise ein Gewindeantrieb 22 mit Motor 23 dienen. Nach der Vorrauhmaschine 13 gelangt die Schuheinheit 13' in den Bereich einer Zwickeinschlagaufrauhmaschine 14 (Fig. 5). Dort wird die Palette 2 zusammen mit der Schuheinheit 3' aus der Transportanlage 1 seitlich mittels eines Schlittens 24 ausgeschleust, in der ausgechleusten Position von der Aufrauhvorrichtung 17 im Bereich des Zwickeinschlags bearbeitet und dann wieder mittels des Schlittens 24 in die Transportanlage 1 zurückgefahren. Für die Betätigung des Schlittens 24 kann ein Gewindeantrieb 25 mit Motor 26 dienen.

Auf dem weiteren Transportweg der Transportanlage 1 gelangt die Schuheinheit 3' dann mindestens noch in eine Ausleiststation 20, in welcher die Schuheinheit 3' der Palette 2 entnommen, der Schuh vom Leisten 3 getrennt und der Leisten 3 wieder auf die freigewordenen Palette 2 aufgesetzt oder ein neuer Leisten 3 auf die frei gewordene Palette 2 aufgesetzt wird. Diese Palette 2 mit Leisten 3 gelangt dann mittels der Transporteinrichtung 1 wieder in den Bereich der Brandsohlenbefestigungsstation 18. Hier beginnt der Bearbeitungsvorgang für eine weitere Schuheinheit.

Bezugszeichenliste:

    1 Transportanlage
    2 Palette
    3 Leisten
    3' Schuheinheit
    4,4' Greifer
    5,5' Handhabungsgeräte
    6 Transportband
    7 Spitzenzwickmaschine
    8 Kappendämpfgerät
    9 Schäftelager
    10 Kontrolleinrichtung
    11 Fersen- und Seitenzwickmaschine
    12 Hitzebehandlungsgerät
    13 Vorrauhmaschine
    14 Zwickeinschlagaufrauhmaschine
    15 Brandsohlenmagazin
    16 Schleif- oder Rauhrad
    17 Aufrauhvorrichtung
    18 Brandsohlenbefestigungsstation
    19 Schuhschaftaufziehstation
    20 Ausleiststation
    21 Anschlag
    22 Gewindeantrieb
    23 Motor
    24 Schlitten
    25 Gewindeantrieb
    26 Motor

**Ansprüche**

1. Schuhfertigungsanlage mit einem von einer Transportanlage (1) gebildeten, vorzugsweise im wesentlichen geschlossenen Transportweg für Paletten (2), auf welchen je ein Leisten (3) bzw. eine Schuheinheit (3'), bestehend aus Leisten (3), auf dem Leistenboden angeordneter Brandsohle und Schuhschaft, fixierbar ist, und wobei der Transportanlage (1) mindestens eine Station (18) für das Aufbringen der Brandsohle auf dem Leistenboden, eine Station für das Aufziehen des Schuhschafts auf den Leisten (3), eine Spitzenzwickmaschine (7), eine Fersen- und Seitenzwickmaschine (11) und eine Station (20) für das Ausleisten des fertiggezwickten bzw. fertiggestellten Schuhs zugeordnet sind, gekennzeichnet durch eine erste Transporteinrichtung (5, 6) zur Entnahme und Überführung des ggf. mit der Brandsohle versehenen Leistens (3) von der Transportanlage (1) an die Spitzenzwickmaschine (7) und eine zweite Transporteinrichtung (5'), welche nach dem Aufleisten des Schuhschafts, dem Spitzenzwicken sowie dem Fersen- und Seitenzwicken durch Handhabung von Hand die spitzen-, seiten- und fersengezwickte Schuheinheit (3') aus der Fersen- und Seitenzwickmaschine (11) entnimmt, wieder auf die Palette (2) lagegerecht aufsetzt und dort fixiert.

2. Anlage nach Anspruch 1, dadurch gekennzeichnet, daß die erste Transporteinrichtung (5, 6) ein erstes Handhabungsgerät (5) für das Ergreifen und Ablegen des ggf. mit Brandsohle versehenen Leistens (3) von der Transportanlage (1) auf einem Transportband (6) o.dgl. aufweist.

3. Anlage nach Anspruch 2, dadurch gekennzeichnet, daß dem Transportband (6) von der Transportanlage (1) zu der Spitzenzwickmaschine (7) ein Schäftelager (9) und ein Kappendämpfgerät (8) zugeordnet ist.

4. Anlage nach Anspruch 2 oder 3, dadurch gekennzeichnet, daß dem Transportband (6) von der Transportanlage (1) zu der Spitzenzwickmaschine (7) eine Kontrolleinrichtung (10) zugeordnet ist, welche bei Entnahme des ggf. mit Brandsohle versehenen Leistens (3) von dem Transportband (6) bzw. Einsetzen der Schuheinheit (3') in die Spitzenzwickmaschine (7) das erste Handhabungsgerät (5) so ansteuert, daß dieses den nächsten, ggf. mit Brandsohle versehenen Leisten (3) der Transportanlage (1) entnimmt und auf das Transportband (6) ablegt.

5. Anlage nach einem der Ansprüche 1 bis 4, dadurch gekennzeichnet, daß die zweite Transporteinrichtung (5') ein zweites Handhabungsgerät (5') aufweist, welches die spitzen-, seiten-und fersengezwickte Schuheinheit (3') aus der Fersen- und Seitenzwickmaschine (11) entnimmt und wieder auf die Palette (2) lagegerecht aufsetzt und dort fixiert.

6. Anlage nach einem der Ansprüche 1 bis 5, dadurch gekennzeichnet, daß der Transportanlage (1) in Förderrichtung nach der zweiten Transporteinrichtung (5') weitere Schuhbearbeitungs und/oder Behandlungseinrichtungen zugeordnet sind, welche entweder die auf der Palette (2) fixierte vorbeifahrende oder im Takt angehaltene Schuheinheit (3') bearbeiten und/oder behandeln, oder die Palette (2) mit der darauf fixierten Schuheinheit (3') aus der Transportanlage (1) zur Bearbeitung und/oder Behandlung der Schuheinheit (3') ausschleusen und anschließend wieder einschleusen, oder die Schuheinheit (3') von der Palette (2) zur Bearbeitung und/oder Behandlung entnehmen und anschließend wieder lagegerecht auf die Palette (2) absetzen.

7. Anlage nach Anspruch 6, dadurch gekennzeichnet, daß zu den weiteren Schuhbearbeitungs- und/oder Behandlungseinrichtungen ein Hitzebehandlungsgerät (12) und/oder eine Vorrauhmaschine (13) und/oder eine Zwickeinschlagaufrauhmaschine (14) und/oder eine Klebestoffauftragemaschine für den Schuhboden und/oder eine Sohlen- klebepresse und/oder eine Absatzaufnagelmaschi- ne gehören/gehört.

8. Anlage nach Anspruch 6 oder 7, dadurch gekennzeichnet, daß der Transportanlage (1) in Transportrichtung nach den Schuhbearbeitungs- und/oder Behandlungseinrichtungen die Ausleiststation (20) zugeordnet ist.

9. Anlage nach Anspruch 8, dadurch gekennzeichnet, daß der Transportanlage (1) zwischen Ausleiststation (20) und der ersten Transporteinrichtung (5, 6) eine Station (18) zum Befestigen einer Brandsohle auf dem Leisten (3) zugeordnet ist.

10. Anlage nach Anspruch 9, dadurch gekennzeichnet, daß die Brandsohlenbefestigungsstation (18) ein Brandsohlenmagazin (15) aufweist.

11. Anlage nach Anspruch 7 bis 10, dadurch gekennzeichnet, daß die Transportanlage (1) die spitzen-, fersen- und seitengezwickte Schuheinheit (3') auf der Palette (2) durch das Hitzebehandlungsgerät (12) hindurchfährt.

12. Anlage nach einem der Ansprüche 7 bis 11, dadurch gekennzeichnet, daß die Vorrauhmaschine (13) seitlich der Transportanlage (1) steht und die auf der Palette (2) fixierte Schuheinheit (3') roh überrauht.

13. Anlage nach einem der Ansprüche 7 bis 12, dadurch gekennzeichnet, daß an der Zwickeinschlagaufrauhmaschine (14) die Palette (2) mit der darauf fixierten Schuheinheit (3') aus der Transportanlage (1) ausgeschleust, in die Zwickeinschlagaufrauhmaschine (14) gefahren, dort die Schuheinheit (3') am Zwickeinschlag aufgerauht und anschließend die Palette (2) mit der darauf fixierten Schuheinheit (3') wieder in die Transportanlage (1) eingeschleust wird.

14. Anlage nach einem der Ansprüche 1 bis 13, dadurch gekennzeichnet, daß die der Trans- portanlage (1) zugeordneten Maschinen, Einrichtun- gen und Geräte über eine zentrale elektronische, programmierbare Steuereinheit miteinander in Verbindung stehen.

15. Anlage nach einem der Ansprüche 1 bis 14, dadurch gekennzeichnet, daß der Palette (2) und/oder dem Leisten (3) eine Kodierung über Größe, Form, Machart u.dgl. Kenngrößen für den jeweils herzustellenden Schuh zugeordnet sind/ist, welche von den Maschinen, Einrichtungen und Geräten lesbar und in den entsprechenden programmgesteuerten Bearbeitungsablauf der betreffenden Maschinen, Einrichtungen und Geräte, vorzugsweise über die zentrale Steuereinheit, umsetzbar ist.

Fig.1

Fig.2

Fig.3

*Fig.4*

*Fig.5*